# EUROPEAN PATENT SPECIFICATION

(11) **EP 1 712 690 B1**
(45) Date of publication and mention of the grant of the patent: **07.07.2010**
(21) Application number: 06007014.1
(22) Date of filing: 01.04.2006
(51) Int. Cl.: E04B 1/66

(54) **Belowgrade damp proofing and/or waterproofing with thermoplastic polyurethane (TPU)**
Unterirdische Feuchtigkeitsabdichtung und/oder Wasserabdichtung mit thermoplastischem Polyurethan
Imperméabilisation souterraine et/ou imperméabilisation avec polyuréthane thermoplastique

(30) Priority: 15.04.2005 US 106937
(43) Date of publication of application: 18.10.2006
(73) Proprietor: Bayer MaterialScience LLC, Pittsburgh, PA 15205 (US)
(72) Inventor: Thompson-Colon, James, Moon Township, PA 15108 (US); Jacobs, Timothy J., Emsworth, PA 15202 (US); Heckla, Walter E., Pittsburgh, PA 15220 (US); Ong, George Niu, Coraopolis, PA 15108 (US); Blaszkiewicz, Michael A., Gibsonia, PA 15044 (US)
(74) Representative: Klimiuk, Meike

(56) References cited:
- EP-A1- 0 708 212
- WO-A-99/37427
- DE-A1- 10 336 565
- US-A- 4 632 860

## Description

### Field of the Invention

The present invention relates, in general, to structural construction and preservation, and more specifically, to processes for damp proofing and/or waterproofing belowgrade structures involving the adhesion of a thin thermoplastic polyurethane (TPU) membrane to the structure.

### Background of the Invention

The entry of water into concrete structures can have major consequences to the interior of the structure. Molds, fungi, salts, pollutants (pesticides and radon) may enter the structure, carried along by the water. After the water evaporates, these undesirable materials are left behind to accumulate inside the structure and affect the internal environment. There are two types of techniques used to reduce water ingress in building foundations; the less effective of these is damp proofing with the ultimate procedure being waterproofing.

Most building codes in the U.S. describe a damp proofing membrane as a preparation (i.e., a coating) that is applied to the exterior surface of foundation walls in areas which are not expected to be subject to hydrostatic pressures due to soil moisture conditions. This coating separates usable living space from exterior belowground conditions and acts as a capillary break to stop the movement (migration) of liquid moisture in the soils from coming into direct contact with the exterior face of a foundation wall system. Thus, damp proofing prevents water vapor and/or minor amounts of moisture from penetrating into a structure. In addition, damp proofing materials are not subject to appreciable weathering or water pressure.

Waterproofing systems prevent water intrusion into the structure. Waterproofing materials may also serve as a barrier to different pollutants. Waterproofing membranes are defined in most U.S. building codes as a preparation (coating/barrier) that is applied to the exterior surface of the foundation walls in areas that are known, or are expected, to be subject to hydrostatic pressures due to soil moistures conditions. Like damp proofing, waterproofing separates usable living space in basements from exterior below ground conditions.

The available approaches to waterproofing include the use of bentonite clay, liquid applied membranes, built-up bituminous membranes, prefabricated sheets and cementitious or crystalline coatings.

Bentonite clay (sodium bentonite) has the advantages of being safe to work with, non-polluting, easy and quick to apply at low temperatures (~ 25°F) and does not require a primer or adhesive. However, the use of this absorptive and colloidal clay has some disadvantages, it requires proper confinement for maximum performance, the clay should be protected from water prior to installation and uncertainty is associated with bentonite because the integrity of the seal cannot be checked prior to backfilling the foundation and water reaching the bentonite material.

Liquid applied membranes (LAM) have the advantages of low cost, being quick to apply, having excellent crack-bridging capabilities and some of the emulsions may be applied on green concrete. Liquid applied membranes suffer from the following disadvantages: there is a possibility of inconsistency in coverage, the materials are toxic and flammable, all of the materials cannot be used on green concrete, the emulsion can be washed off by rain and the LAM cannot be exposed to ultraviolet (UV) light.

Sheet membranes have a number of advantages over the above-described materials. Sheet membranes have a high water pressure resistance, are of a consistent thickness, provide for an easy repair of installation faults and possess crack-bridging capabilities. Thus, a number of patents describe materials and processes for damp proofing and/or waterproofing belowground structures using sheet materials.

Haage, et al., in U.S. Pat. No. 4,239,795, provide a protective covering for the protection of surface seals against mechanical damage in building constructions and other civil engineering constructions which comprises a composite of an elastic, waterproof thermoplastic synthetic resin film sheet and/or synthetic resin layer and a lattice-like fabric having knot couplings or points of intersection of the threads that yield under the effect of a load.

U.S. Pat. No. 4,589,804, issued to Paeglis, et al. describes a waterproof membrane comprising an elastomeric sheet which is formed of a composition including a neutralized acid group containing elastomeric polymer, the neutralized acid group cation selected from the group consisting of ammonium, antimony, aluminum, iron, lead and a metal of Group IA, IIA, IB or IIB of the Periodic Table of Elements and mixtures thereof; a non-polar process oil; carbon black and a preferential plasticizer. In a preferred embodiment the membrane is supported with a supporting sheet selected from the group consisting of fabrics, paper and metal foil. The use of this membrane as a roof covering, pond, pit or aqueduct liner is recited.

Villarreal, in U.S. Pat. No. 4,693,042, discloses a system of flood protection for buildings. This system is made of a lower skirt of plastic film secured by a waterproof seal to the building foundation, an upper skirt of plastic film secured to an upper level of the building above the maximum projected rise of flood waters, and side skirts secured at each side of the upper and lower skirts. The skirts form adjoining continuous enclosures which are to extend completely around the building are to be of a size and shape permitting each skirt to be unfolded or unwound to meet the other. The edges of each skirt are to have waterproof seals, such as a zip-lock seal, for waterproof sealing to protect the building against rising waters.

U.S. Pat. No. 4,775,567, issued to Harkness, provides a waterproofing laminate said to be suitable for use in roofs, floors, or other surfaces where waterproofing is desired. The laminate of Harkness is made of an elastomeric sheet secured to a modified bitumen layer and a release sheet secured to the modified bitumen layer.

U.S. Pat. No. 5,271,781, issued to Anno, et al., discloses a waterproof sheet for concrete structures. The sheet is made of a thermoplastic synthetic resin, and powder of cement which is pressed against the sheet and adhered to one side surface or both side surfaces of the sheet. Anno, et al. also disclose a method of manufacturing a waterproof sheet for concrete structures and a method of applying a waterproof sheet to the concrete structure.

Bartlett, et al., in U.S. Pat. No. 5,316,848, provide a waterproofing membrane made of a carrier, a synthetic adhesive coated on one face of the carrier substrate, and a protective layer coated on the synthetic adhesive. The disclosure of Bartlett, et al. also provides a method of waterproofing post cast concrete structures involving adhering their waterproofing membrane to all or part of the exposed surface of the structure.

U.S. Pat. No. 5,481,838, issued to Fishel et al., teaches an anti-fracture, water-resistant, masonry-bondable membrane made of a lamina having a central layer generally containing at least one ply of a flexible material, e.g., an organic polymer such as polyvinyl chloride, generally in the form of a sheet, and a nonwoven fiber layer physically bonded to each side thereof. The formation of the lamina in the invention of Fishel et al. is accomplished by laminating a single, nonwoven layer to a layer or sheet of a flexible material in the presence of heat and pressure to produce a construction wherein the nonwoven fibers are partially embedded in the flexible material. Subsequently, two such constructions are bonded together under heat and pressure to produce essentially a four-ply lamina wherein the layers of flexible material such as a polymer are fused to one another. The flexible membrane lamina, when utilized between and bonded to an exterior masonry article such as ceramic tile and to a substrate such as concrete, is said to be very effective in preventing any cracks from propagating from the substrate to the article. The flexible membrane of Fishel et al. is also stated to have very good hydrostatic water resistance.

Oakley, in U.S. Pat. No. 6,224,700, discloses a method for waterproofing an architectural component involving application of a waterproofing composition to the component above a grade line to form an non-swelling elastomeric membrane having a tacky exterior and pressing a flexible, non-porous polymeric sheet onto the tacky exterior of the elastomeric membrane. Oakley prefers that his polymeric sheet be stronger than the elastomeric membrane to protect the elastomeric membrane from punctures or tears.

U.S. Pat. No. 6,586,080 issued to Heifetz teaches a two layered sealing sheet assembly bondable to a construction surface made of (a) an upper layer of a first substance, the upper layer being selected fluid impermeable; and (b) a lower flexible layer of a second substance, the lower flexible layer being bondable to the construction surface. The upper layer and the lower flexible layer are at least partially attached to one another.

DE-A 103 36 565 describes a three-layered joint strip (upper layer, lower layer and intermediate layer) intended merely for joint sealing and gap sealing. The upper and lower layers of the joint strip of DE-A 103 36 565 are said to be essentially identical with artificial (i.e., non natural) fleeces being preferred as the upper and lower layers. The intermediate layer may be TPU.

Many of these damp proofing and waterproofing methods involve complicated, labor-intensive processes to apply the sometimes complex waterproofing or damp proofing material to the structure. Consequently, a need continues to exist in the art for a simple, effective process for damp proofing and/or waterproofing of belowground structures.

### Summary of the Invention

Accordingly, the present invention provides such a process for damp proofing and/or waterproofing belowgrade structures involving the direct adhesion of a thin thermoplastic polyurethane (TPU) film or sheet to the structure. The inventive processes may find application in damp proofing and/or waterproofing of belowgrade structures such as building foundations and basements, reservoirs, ornamental pools, ponds, plaza decks, parking decks, walkways, tunnels, earthen shelters, bridge abutments, retaining walls, landfills, water/chemical canals, etc. The inventive processes greatly reduce or even prevent the ingress of water and therefore the concomitant entry of waterborne molds, fungi, salts and other pollutants such as pesticides and radon into those structures.

These and other advantages and benefits of the present invention will be apparent from the Detailed Description of the Invention herein below.

### Detailed Description of the Invention

The present invention will now be described for purposes of illustration and not limitation. Except in the operating examples, or where otherwise indicated, all numbers expressing quantities, percentages and so forth in the specification are to be understood as being modified in all instances by the term "about."
The present invention provides a damp proofing and/or waterproofing process involving direct adhering to a belowgrade surface of a structure a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).
The present invention yet further provides one of a building foundation, building basement, reservoir, ornamental pool, pond, plaza deck, parking deck, walkway, tunnel, earthen shelter, bridge abutment, retaining wall, landfill, chemical canal or water canal having directly adhered to a belowgrade surface thereof a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).
The present invention still further provides a process for reducing ingress of water into a structure involving direct adhering to a belowgrade surface of the structure a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).
The present invention also provides a process for reducing ingress of at least one of radon, molds, fungi, salts and pesticides into a structure involving direct adhering to a belowgrade surface of the structure a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).

Properties of the waterproofing materials described above in the Background section of the instant specification are compared to those of one of the thermoplastic polyurethane membranes used in the inventive processes in the table below.

| **Material** | **Weight [kg/18.6 m²] green** | **Use on concrete** | **Elongation [%]** | **Tensile [MPa]** | **Thickness [mm]** | **Resist. hydro. head [m]** |
|---|---|---|---|---|---|---|
| **bentonite** | 104 (230 lb/200f²) | yes | 100-700 | - | 3.81-5.08 (150-200 mils) | 5.7 (150 ft) |
| **LAM** | NA | some | 500-2000 | - | 1.524-5.08 (60-200 mils) | 19.5 (64 ft) |
| **sheet membrane** | 36.3 (80 lb/200f²) | no | 300-850 | 34.5 (5000 psi) | 1.524-3.048 (60-120 mils) | 150-240 (45.7)73.2 ft) |
| **TPU sheet** | 5.44 (12 lb/200f²) | unknown | 600 | 62.1 (9000 psi) | 0.1524 (6 mils) | 61 (200 ft) |

Any thermoplastic polyurethane membrane may be used in the inventive process. Particularly preferred are those thermoplastic polyurethanes made from aromatic polyethers. The membranes are preferably of the thickness of from 0.0508 to 0.457 mm (0.002 to 0.018 in.) (2 to 18 mils), more preferably from 0.152 to 0.381 mm (0.006 to 0.015 in.) and most preferably 0.152 mm (0.006 in.) The thickness of the thermoplastic polyurethane membrane useful in the process(es) of the present invention may range between any combination of these values, inclusive of the recited values.

The hydrostatic resistance of the thermoplastic membranes is preferably at least 138 kPa (20 psi), more preferably at least 276 kPa (40 psi) and most preferably at least 621 kPa (90 psi). Thermoplastic polyurethane membranes, particularly those which are 0.0508 mm (0.002 in.), may optionally have a bituminous, bentonite or other coating applied to one side of the membrane.

Preferred as adhesive in the inventive process are those adhesives which are known to those skilled in the art to be damp proof and/or waterproof. The adhesive may be pre-applied to the thermoplastic polyurethane membrane or may be applied to the belowgrade surface to be treated by the inventive method prior to application of the membrane. A particularly preferred embodiment of the inventive process employs a "peel and stick" adhesive-backed thermoplastic polyurethane membrane which has the dual advantages of i) avoiding the production of harmful fumes and ii) removing the necessity of having to use machinery to apply the material. Another particularly preferred embodiment of the inventive process employs double sided adhesive tape to seal seams where the thermoplastic membranes meet or overlap.

### EXAMPLES

The present invention is further illustrated, but is not to be limited, by the following examples. The following materials were used in the examples:

| | |
|---|---|
| TPU-A | a commercially available thermoplastic membrane having a thickness of 0.152 mm (0.006 in.); |
| TPU-B | a commercially available thermoplastic membrane having a thickness of 0.152 mm (0.006 in.); |
| TPU-C | a commercially available thermoplastic membrane having a thickness of 0.254 mm (0.010 in.); |
| TPU-D | a commercially available thermoplastic membrane having a thickness of 0.254 mm (0.010 in.); |
| TPU-E | a commercially available thermoplastic membrane having a thickness of 0.381 mm (0.015 in.); and |
| TPU-F | a commercially available thermoplastic membrane having a thickness of 0.0508 mm (0.002 in.) |

The thermoplastic polyurethane (TPU) materials tested herein were subjected to hydrostatic pressure according to ASTM D-5385, "Standard Test Method for Hydrostatic Pressure Resistance of Waterproofing Membranes."

Briefly, the test used a 20.3 cm x 40.6 cm x 5.08 cm (8 in. x 16 in. x 2 in.) concrete paver with a 3.18 mm (0.125 in.) kerf cut in the direction of the 40.6 cm (16 in.) to a depth of 4.44 cm (1.75 in.). The TPU membrane was cut into two pieces and glued to the concrete (uncut side) so that the two pieces of the membrane formed a 5.08 cm (2 in.) overlap. The adhesive was allowed to cure according to the manufacturer's instructions.

After the adhesive had cured, the cement paver was cracked by inserting a wedge in the kerf. The wedge, 6.35 mm (0.25 in.) thick, spread the kerf in the cement paver (when the sample was mounted into the fixture) and produced a crack on the surface to which the TPU membrane had been glued. The membrane along the crack was subsequently stretched.

The sample was mounted onto the fixture with the membrane facing towards the water cavity. The retainer plate was bolted and tightened. This tightening forced the concrete to align itself with the frame and retainer plate, opening the kerf to a 6.35 mm (0.25 in.) crack and thus stretching the membrane. After the tightening procedure, the water cavity was filled and air was applied to create hydrostatic pressure against the membrane. The pressure started at 103 kPa (15 psi) and was increased 103 kPa (15 psi) every hour until 621 kPa (90 psi) was achieved.

A failure results if the water leaks from the cavity. This leak is the result of either the membrane being unable to withstand the pressure or failure of the adhesive between the overlap. Table I below summarizes the results of these tests.

**Table I**

| **Ex. No.** | **Membrane material** | **[mm]** | **Result** |
|---|---|---|---|
| 1 | TPU-A | 0.1524 | Failed at overlap 310 kPa (45 psi) |
| | | (6 mils) | |
| 2 | TPU-B | 0.1524 | Failed at overlap 310 kPa (45 psi) |
| | | (6 mils) | |
| 3 | TPU-C | 0.254 | Failed at overlap 310 kPa (45 psi) |
| | | (10 mils) | |
| 4 | TPU-D | 0.254 | Failed at overlap 310 kPa (45 psi) |
| | | (10 mils) | |
| 5 | TPU-E | 0.381 | Failed at overlap 310 kPa (45 psi) |
| | | (15 mils) | |
| 6 | TPU-F | 0.0508 | Failed (no overlap) 270 kPa (30 psi)-pin hole |
| | | (2 mils) | |
| 7 | TPU-B | 0.1524 | Held at 621 kPa (90 psi) |
| | | (6 mils) | |

All of the thermoplastic polyurethane (TPU) materials in Examples 1-6, were capable of withstanding a hydrostatic pressure of 207 kPa (30 psi), but failed at the overlap area at the hydrostatic pressure as noted above in Table I. Although not wishing to be limited to any particular theory, the inventors herein speculate that a possible explanation for this failure could be the use of an incorrect type of adhesive. See Table II below for lists of the components in the adhesives used.

The thermoplastic membrane used in Example 7 was sealed at the overlap area with an automotive trim double-face tape (3M Acrylic Foam Tape (AFT) 5390).

**Table II - Adhesives**

| **Adhesive Name (Manufacturer)** | **Listed Contents** |
|---|---|
| SPRAY HIGH STRENGTH 90 (3M) | dimethyl ether, methyl acetate, cyclohexane, diflouroethane, pentane, methyl alcohol |
| SCOTCH WELD DP-8010 (3M) | methacrylate, acrylonitrile-butadiene-styrene resin, synthetic rubber oligomer, dibutyl itaconate, polyfunctional aziridine, amine borane complex and amorphous silica |
| ORIGINAL CONTACT CEMENT (DAP WELDWOOD) | petroleum naphtha, methyl ethyl ketone, toluene |
| ULTIMATE GLUE (ELMERS) | MDI pre-polymer |
| GOOP contact adhesive and sealant (Eclectic Products) | toluene and petroleum distillates |
| SUPER GLUE (Pacer Technology) | cyanoacrylate ester |

All of the TPU materials used in Examples 1-6 were retested without an overlap and passed at 621 kPa (90 psi) for one hour (data not shown).

The inventors herein contemplate that the inventive processes may find wide applicability in damp proofing and waterproofing such structures as building foundations, building basements, reservoirs, ornamental pools, ponds, plaza decks, parking decks, walkways, tunnels, earthen shelters, bridge abutments, retaining walls, landfills, chemical canals and water canals. In addition, the inventive processes may be helpful in reducing the levels of radon and other harmful environmental pollutants, pesticides, molds, fungi etc. in buildings by greatly reducing or preventing the ingress of water in which those contaminants are dissolved.

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A damp proofing and/or waterproofing process consisting of:
directly adhering to a belowgrade surface of a structure a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).

2. The process according to Claim 1, wherein the thermoplastic polyurethane (TPU) contains one or more aromatic polyethers.

3. The process according to Claim 1, wherein the thermoplastic polyurethane (TPU) membrane has a thickness of from 0.152 mm (0.006 inches) to 0.381 mm (0.015 inches).

4. The process according to Claim 1, wherein the thermoplastic polyurethane (TPU) membrane has a thickness of 0.152 mm (0.006 inches).

5. The process according to Claim 1, wherein the belowgrade surface comprises concrete or masonry.

6. The process according to Claim 1, wherein the structure is chosen from building foundations, building basements, reservoirs, ornamental pools, ponds, plaza decks, parking decks, walkways, tunnels, earthen shelters, bridge abutments, retaining walls, landfills, chemical canals and water canals.

7. The process according to Claim 1, wherein the thermoplastic polyurethane (TPU) membrane is capable of withstanding a hydrostatic pressure of at least 276 kPa (40 psi).

8. The process according to Claim 1, wherein the thermoplastic polyurethane (TPU) membrane is capable of withstanding a hydrostatic pressure of at least 621 kPa (90 psi).

9. The process according to Claim 1, wherein a bituminous or bentonite coating is applied to one side of the membrane.

10. The process according to Claim 1, wherein an adhesive backing is applied to the membrane or the belowgrade surface.

11. One of a building foundation, building basement, reservoir, ornamental pool, pond, plaza deck, parking deck, walkway, tunnel, earthen shelter, bridge abutment, retaining wall, landfill, chemical canal and water canal having directly adhered to a belowgrade surface thereof a thermoplastic polyurethane (TPU) membrane having a thickness of from 0.0508 mm (0.002 inches) to 0.457 mm (0.018 inches) and capable of withstanding a hydrostatic pressure of at least 138 kPa (20 psi).

## Patentansprüche

1. Feuchtigkeits- und/oder Wasserabdichtungsverfahren, bestehend aus:
dem direkten Aufkleben einer thermoplastischen Polyurethan- (TPU-) Membran mit einer Dicke von 0,0508 mm (0,002 Zoll) bis 0,457 mm (0,018 Zoll), die einem hydrostatischen Druck von zumindest 138 kPa (20 psi) standhalten kann, auf eine Oberfläche einer Struktur unter Geländeniveau.

2. Verfahren nach Anspruch 1, worin das thermoplastische Polyurethan (TPU) einen oder mehrere aromatische Polyether enthält.

3. Verfahren nach Anspruch 1, worin die thermoplastische Polyurethan- (TPU-) Membran eine Dicke von 0,152 mm (0,006 Zoll) bis 0,381 mm (0,015 Zoll) aufweist.

4. Verfahren nach Anspruch 1, worin die thermoplastische Polyurethan- (TPU-) Membran eine Dicke von 0,152 mm (0,006 Zoll) aufweist.

5. Verfahren nach Anspruch 1, worin die Oberfläche unter Geländeniveau Beton oder Mauerwerk umfasst.

6. Verfahren nach Anspruch 1, worin die Struktur aus Gebäudefundamenten, Untergeschossen, Nutzbecken, Zierbecken, Teichbecken, Dachterrassen, Parkdecks, Gehwegen, Tunneln, Erdbauten, Brückenwiderlagern, Stützmauern, Deponien, Chemikalienkanälen und Wasserkanälen ausgewählt ist.

7. Verfahren nach Anspruch 1, worin die thermoplastische Polyurethan- (TPU-) Membran einem hydrostatischen Druck von zumindest 276 kPa (40 psi) standhalten kann.

8. Verfahren nach Anspruch 1, worin die thermoplastische Polyurethan- (TPU-) Membran einem hydrostatischen Druck von zumindest 621 kPa (90 psi) standhalten kann.

9. Verfahren nach Anspruch 1, worin eine Bitumen- oder Bentonitbeschichtung auf eine Seite der Membran aufgebracht wird.

10. Verfahren nach Anspruch 1, worin eine Klebeschicht auf die Membran oder die Oberfläche unter Geländeniveau aufgebracht wird.

11. Eines aus einem Gebäudefundament, einem Untergeschoss, einem Nutzbecken, einem Zierbecken, einem Teichbecken, einer Dachterrasse, einem Parkdeck, einem Gehweg, einem Tunnel, einem Erdbau, einem Brückenwiderlager, einer Stützmauer, einer Deponie, einem Chemikalienkanal und einem Wasserkanal mit einer direkt auf einer Oberfläche davon unter Geländeniveau aufgeklebten thermoplastischen Polyurethan- (TPU-) Membran mit einer Dicke von 0,0508 mm (0,002 Zoll) bis 0,457 mm (0,018 Zoll), die einem hydrostatischen Druck von zumindest 138 kPa (20 psi) standhalten kann.

## Revendications

1. Procédé d'imperméabilisation et/ou hydrofugation consistant à :
fixer directement sur une surface au-dessous du sol d'une structure, une membrane en polyuréthane thermoplastique (TPU) ayant une épaisseur de l'ordre de 0,0508 mm (0,002 pouces) à 0,457 mm (0,018 pouces) et pouvant résister à une pression hydrostatique d'au moins 138 kPa (20 psi).

2. Procédé selon la revendication 1, dans lequel le polyuréthane thermoplastique (TPU) contient un ou plusieurs polyéthers aromatiques.

3. Procédé selon la revendication 1, dans lequel la membrane en polyuréthane thermoplastique (TPU) a une épaisseur de l'ordre de 0,152 mm (0,006 pouces) à 0,381 mm (0,015 pouces).

4. Procédé selon la revendication 1, dans lequel la membrane en polyuréthane thermoplastique (TPU) a une épaisseur de 0,152 mm (0,006 pouces).

5. Procédé selon la revendication 1, dans lequel la surface au-dessous du sol comprend du béton ou des pierres naturels.

6. Procédé selon la revendication 1, dans lequel la structure est choisie parmi les fondations de bâtiment, les sous-sols de bâtiment, les réservoirs, les piscines ornementales, les bassins, les plates-formes de terrasse, les ponts de parking, les passerelles, les tunnels, les abris souterrains, les culées, les parois de retenue, les comblements de terrain, les canaux chimiques et les canaux d'eau.

7. Procédé selon la revendication 1, dans lequel la membrane en polyuréthane thermoplastique (TPU) peut résister à une pression hydrostatique d'au moins 276 kPa (40 psi).

8. Procédé selon la revendication 1, dans lequel la membrane en polyuréthane thermoplastique (TPU) peut résister à une pression hydrostatique d'au moins 621 kPa (90 psi).

9. Procédé selon la revendication 1, dans lequel on applique un revêtement bitumineux ou de bentonite sur un côté de la membrane.

10. Procédé selon la revendication 1, dans lequel un renforcement adhésif est appliqué sur la membrane ou la surface au-dessous du sol.

11. L'un parmi une fondation de bâtiment, un sous-sol de bâtiment, un réservoir, une piscine ornementale, un bassin, une plate-forme de terrasse, un pont de parking, une passerelle, un tunnel, un abri souterrain, une culée, une paroi de retenue, un comblement de terrain, un canal chimique et un canal d'eau étant directement fixé sur sa surface au-dessous du sol d'une membrane en polyuréthane thermoplastique (TPU) ayant une épaisseur de l'ordre de 0,0508 mm (0,002 pouces) à 0,457 mm (0,018 pouces) et pouvant résister à une pression hydrostatique d'au moins 138 kPa (20 psi).
